# EUROPEAN PATENT SPECIFICATION

(11) **EP 4 167 153 B1**
(45) Date of publication and mention of the grant of the patent: **26.03.2025**
(21) Application number: 22198343.0
(22) Date of filing: 28.09.2022
(51) Int. Cl.: G06Q 10/04, G06Q 50/02

(54) **CULTIVATION SUPPORT SYSTEM, CULTIVATION SUPPORT METHOD, AND PROGRAM**
KULTIVIERUNGSUNTERSTÜTZUNGSSYSTEM, KULTIVIERUNGSUNTERSTÜTZUNGSVERFAHREN UND PROGRAMM
SYSTÈME DE SUPPORT DE CULTURE, PROCÉDÉ DE SUPPORT DE CULTURE ET PROGRAMME

(30) Priority: 12.10.2021 JP 2021167728
(43) Date of publication of application: 19.04.2023
(73) Proprietor: Yokogawa Electric Corporation, Musashino-shi, Tokyo 180-8750 (JP)
(72) Inventor: Satou, Hirari, Musashino-shi, Tokyo 180-8750 (JP); Hatsugai, Emiko, Musashino-shi, Tokyo 180-8750 (JP)
(74) Representative: Hoffmann Eitle

(56) References cited:
- JP-A- 2016 146 039
- JP-A- 2021 125 143
- US-A1- 2020 327 603

## Description

### BACKGROUND

### 1. TECHNICAL FIELD

The present invention relates to a cultivation support system, a cultivation support method, and a program.

### 2. RELATED ART

Non-Patent Document 1 discloses a profit model for providing a guideline for facility construction and management of plant factories. Non-Patent Document 2 discloses a survey on light intensity, chip burn occurrence, and leaf calcium content with respect to a growth rate of lettuce.

US2020327603A1 relates to a computer-implemented method that includes receiving a plurality of agricultural data records including yield properties of products grown in fields and raw field features of the fields. The method also includes transforming the raw field features into distinct feature classes that characterize key features affecting yield of the one or more products, and generating, using data from the plurality of agricultural data records and the distinct feature classes, genomic-by-environmental relationships between one or more products, yield properties of the one or more products, and field features associated with the one or more products. Further, the method includes generating, based at least in part on the genomic-by-environmental relationships, predicted yield performance for a set of products associated with one or more target environments, generating product recommendations for the one or more target environments based on the predicted yield performance for the set of products, and providing one or more instructions configured to cause display of the product recommendations.

Another prior art document is JP 2021 125143 A.

### Prior Art Document

### Non-Patent Document

Non-Patent Document 1: Shogo MORIYUKI, Hiroaki KANEDA, Yusaku MIYAGI, Nobuhiro SUGIMURA, and Hirokazu FUKUDA, "Profit Models Based on the Growth Dynamics of Lettuce Populations in a Plant Factory", Environ. Control Biol., 56 (4), 143-148, 2018 DOI : 10.2525 / ecb.56.143
Non-Patent Document 2: Yuki Sago1, et al., "Effects of Light Intensity and Growth Rate on Tipburn Development and Leaf Calcium Concentration in Butterhead Lettuce", HORTSCIENCE, 51(9), 1087-1091, 2016 DOI:10.21273/HORTSCI10668-16

### SUMMARY

The object is achieved by the subject matter of the independent claims. Advantageous embodiments are defined by the dependent claims. Examples are provided for facilitating the understanding of the present disclosure. A first example provides a cultivation support system. The cultivation support system may include a cultivation condition acquisition unit configured to acquire a plurality of cultivation conditions for cultivating a plant. The cultivation support system may include a cultivation result acquisition unit configured to acquire a plurality of cultivation results in a cultivation of the plant. The cultivation support system may include a class estimation unit configured to classify the plurality of cultivation conditions into a plurality of classes. The cultivation support system may include a calculation unit configured to use the plurality of cultivation conditions and the plurality of cultivation results, and calculate reliability in each of the plurality of classes for a model that predicts a cultivation result from a cultivation condition.

The cultivation support system may include a model generation unit configured to generate the model that predicts the cultivation result from the cultivation condition.

The model generation unit may be configured to generate a model of a Bayesian network model structure.

The class estimation unit may be configured to classify, into the plurality of classes, the plurality of cultivation conditions acquired by the cultivation condition acquisition unit. The model generation unit may be configured to use the plurality of cultivation conditions classified into the plurality of classes and the plurality of cultivation results, and generate the model of the Bayesian network model structure.

The model generation unit may be configured to use parts of the plurality of cultivation conditions acquired by the cultivation condition acquisition unit and the plurality of cultivation results acquired by the cultivation result acquisition unit, and generate the model. The calculation unit may be configured to calculate the reliability by using other parts of the plurality of cultivation conditions acquired by the cultivation condition acquisition unit and the plurality of cultivation results acquired by the cultivation result acquisition unit.

The cultivation support system may include a preprocessing unit configured to preprocess at least one piece of data of the plurality of cultivation conditions or the plurality of cultivation results. The class estimation unit may be configured to use the preprocessed data, and classify the plurality of cultivation conditions into the plurality of classes. The calculation unit may be configured to use a result of the classification, and calculate the reliability in each of the plurality of classes.

The preprocessing unit may be configured to perform the preprocessing including: at least one of associating data of the plurality of cultivation conditions and data of the plurality of cultivation results on a time axis; complementing at least one of the data of the plurality of cultivation conditions or the data of the plurality of cultivation results; processing an outlier of at least one of the data of the plurality of cultivation conditions or the data of the plurality of cultivation results; or rounding processing of at least one of the data of the plurality of cultivation conditions or the data of the plurality of cultivation results.

The cultivation support system may include a cultivation result estimation unit configured to use the model, and predict the cultivation result from the cultivation condition in the cultivation of the plant. The cultivation support system may include an output unit configured to output data according to the predicted cultivation result. The class estimation unit may be configured to classify the cultivation condition used for predicting the cultivation result into at least one of the plurality of classes. The output unit may be configured to output the data according to the predicted cultivation result based on the reliability in the classified class.

The output unit may be configured to execute at least one of outputting the predicted cultivation result together with the reliability in the classified class, or outputting the data according to the predicted cultivation result when the reliability in the classified class is higher than or equal to a first threshold value.

A second example provides a cultivation support system. The cultivation support system may include a cultivation condition acquisition unit configured to acquire a cultivation condition for cultivating a plant. The cultivation support system may include a class estimation unit configured to classify the cultivation condition into any of a plurality of classes. The cultivation support system may include a cultivation result estimation unit configured to use a model that predicts a cultivation result from the cultivation condition, and predict the cultivation result from the cultivation condition in a cultivation of the plant. The cultivation support system may include an output unit configured to output data according to the predicted cultivation result based on reliability in the classified class.

The class estimation unit may be configured to classify the cultivation condition, which is used for the prediction of the cultivation result estimation unit, into any of the plurality of classes into which the plurality of cultivation conditions are classified in generating the model that predicts the cultivation result from the cultivation condition.

A third example provides a cultivation support method. The cultivation support method may include acquiring a plurality of cultivation conditions for cultivating a plant. The cultivation support method may include acquiring a plurality of cultivation results in a cultivation of the plant. The cultivation support method may include classifying the plurality of cultivation conditions into a plurality of classes. The cultivation support method may include using the plurality of cultivation conditions and the plurality of cultivation results, and calculating reliability in each of the plurality of classes for a model that predicts a cultivation result from a cultivation condition.

A fourth example provides a program. The program may cause a computer to function as a cultivation condition acquisition unit configured to acquire a plurality of cultivation conditions for cultivating a plant. The program may cause the computer to function as a cultivation result acquisition unit configured to acquire a plurality of cultivation results in a cultivation of the plant. The program may cause a computer to function as a class estimation unit configured to classify the plurality of cultivation conditions into a plurality of classes. The program may cause a computer to function as a calculation unit configured to use the plurality of cultivation conditions and the plurality of cultivation results, and calculate reliability in each of plurality of classes for a model that predicts a cultivation result from a cultivation condition.

The summary clause does not necessarily describe all necessary features of the embodiments of the present invention. The present invention may also be a sub-combination of the features described above.

### BRIEF DESCRIPTION OF THE DRAWINGS

Fig. 1 shows a configuration of a cultivation support system 10 according to the present embodiment.
Fig. 2 is a flow showing an example of an operation of the cultivation support system 10.
Fig. 3 shows an example of a layout of a plant factory in which a plant is cultivated in the cultivation support system 10.
Fig. 4 shows an example of a part of a database of cultivation condition data 222 that is stored in a storage unit 220.
Fig. 5 shows an example of another part of the database of the cultivation condition data 222 that is stored in the storage unit 220.
Fig. 6 shows an example of another part of the database of the cultivation condition data 222 that is stored in the storage unit 220.
Fig. 7 shows an example of a database of cultivation result data 224 that is stored in the storage unit 220.
Fig. 8 shows an example of a preprocessed data set.
Fig. 9 shows an example of a feature amount of data for each class which is classified by a class estimation unit 234.
Fig. 10 shows an example of reliability which is calculated for each identifier from a prediction result obtained by a calculation unit 250.
Fig. 11 shows an example of reliability for each class which is calculated from the prediction result obtained by the calculation unit 250.
Fig. 12 shows an example of a model of a Bayesian network model structure that is generated by a model generation unit 236.
Fig. 13 shows an example of a class estimation model of a Bayesian network model structure that is generated by the class estimation unit 234.
Fig. 14 is a flow showing an example of a prediction result output operation of the cultivation support system 10.
Fig. 15 shows a configuration of another example of the cultivation support system 10 according to the present embodiment.
Fig. 16 shows an example of a computer 2200 in which a plurality of aspects of the present invention may be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all combinations of features described in the embodiments are essential to the solution of the invention.

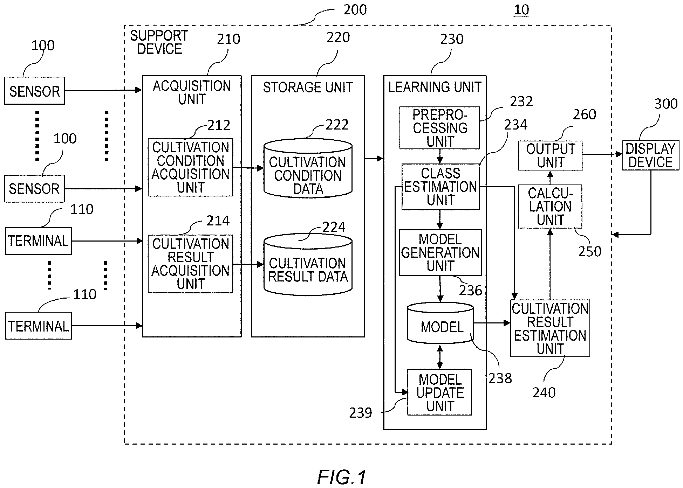

Fig. 1 shows a configuration of a cultivation support system 10 according to the present embodiment. The cultivation support system 10 can predict a cultivation result from a cultivation condition in cultivation of a plant, and present a prediction result to a user according to reliability of the prediction. The cultivation support system 10 includes a plurality of sensors 100, a plurality of terminals 110, a support device 200, and a display device 300.

The plurality of sensors 100 are connected to the support device 200 in a wired or wireless manner, detect at least one of the cultivation condition and the cultivation result in the cultivation of the plant, and supply sensor data to the support device 200. The plurality of sensors 100 may be installed in a surrounding environment of the plant (for example, a leaf or a stem, or the like) being cultivated (for example, in a plant factory, in a house for cultivation, in a medium, or the like), or in the plant being cultivated.

Here, the cultivation condition may include at least one of an environmental condition in which the plant has been cultivated or a state of the cultivated plant. The environmental condition may include at least one of a temperature, humidity, a water content, an amount of solar radiation, and an amount of light of the surrounding environment of the cultivated plant, a medium temperature, electrical conductivity (EC) of the medium, a hydrogen ion index (pH) of the medium, a carbon dioxide concentration (ppm), a cultivation area, a cultivation start date, a cultivation period (sowing, raising of seedlings, permanent planting, greening), a type of a drug used for the cultivation, or an amount of the drug. In addition, the state of the plant may include at least one of a sap flow of the cultivated plant, leaf surface temperature, or a stem diameter.

The cultivation result may include at least one of an injury in the cultivation of the plant or a harvest result of the cultivated plant. The injury in the cultivation of the plant may include at least one of a physiological injury such as blossom-end rot and fruit cracking, an injury due to a disease, or an injury due to a pest. Data that is supplied to the support device 200 and indicates the injury may include at least one of a presence and absence of an occurrence, a type of the injury, a frequency of the occurrence (for example, a ratio of strains in which the injury has occurred in a cultivation unit), or a range. The harvest result of the plant may include at least one of a weight, a number, or a quality (a sugar content, a water content, or the like) of at least one harvested plant.

The plurality of terminals 110 may be computers, such as a PC (a personal computer), a tablet type computer, a smartphone, a workstation, a server computer, or a general-purpose computer, which are connected to the support device 200 in a wired or wireless manner, and are owned by a grower or the like who performs the cultivation. The terminal 110 may receive an input from the grower about at least one of the cultivation condition or the cultivation result of the cultivation of the plant, and transmit the input data to the support device 200. The terminal 110 may be a management device that manages the cultivation condition, and may receive data indicating a set value of the cultivation condition from the grower.

The support device 200 is connected to the display device 300. The support device 200 can perform a reliability calculation operation for calculating the reliability of the cultivation result prediction, and a prediction result output operation for outputting the prediction of the cultivation result according to the reliability. In the reliability calculation operation, the support device 200 learns by using the cultivation condition and the cultivation result obtained by a test cultivation or the like, generates a model 238, and calculates the reliability of the prediction by the model 238. In the prediction result output operation, the support device 200 uses the model 238, and outputs, to the display device 300, the result of predicting the cultivation result from the cultivation condition, according to the reliability of the prediction.

The support device 200 may be a computer such as a PC, a tablet type computer, a smartphone, a workstation, a server computer, or a general-purpose computer, or may be a computer system in which a plurality of computers are connected. Such a computer system is also a computer in a broad sense. In addition, the support device 200 may be implemented in the computer by one or more executable virtual computer environments. Instead of this, the support device 200 may be a dedicated computer designed for the cultivation support, or may be dedicated hardware realized by dedicated circuitry. When the computer is used, the support device 200 is realized by executing a program by the computer.

The support device 200 includes an acquisition unit 210, a storage unit 220, a learning unit 230, a cultivation result estimation unit 240, a calculation unit 250, and an output unit 260. The acquisition unit 210 is connected to the plurality of sensors 100 and terminals 110, and acquires data for learning. The acquisition unit 210 has a cultivation condition acquisition unit 212 and a cultivation result acquisition unit 214.

The cultivation condition acquisition unit 212 is connected to the storage unit 220, and is configured to acquire a plurality of cultivation conditions for cultivating the plant, and supply cultivation condition data 222 indicating the cultivation conditions to the storage unit 220. The cultivation condition acquisition unit 212 may acquire the cultivation condition data 222 from the plurality of sensors 100 and the terminals 110. The cultivation condition acquisition unit 212 may acquire the cultivation condition data 222 input from the user of the support device 200.

The cultivation result acquisition unit 214 is connected to the storage unit 220, and is configured to acquire a plurality of cultivation results in the cultivation of the plant, and supply cultivation result data 224 indicating the cultivation results to the storage unit 220. The cultivation result acquisition unit 214 may acquire the cultivation result data 224 from the plurality of sensors 100 and the terminals 110. The cultivation result acquisition unit 214 may acquire the cultivation result data 224 input from the user of the support device 200.

The storage unit 220 is connected to the learning unit 230, and stores the cultivation condition data 222 and the cultivation result data 224 acquired by the acquisition unit 210. Then, the storage unit 220 supplies the cultivation condition data 222 and the cultivation result data 224 to the learning unit 230 as data for learning.

The learning unit 230 is connected to the cultivation result estimation unit 240, and generates and updates a model that predicts the cultivation result from the cultivation condition by using the data for learning supplied from the storage unit 220. The learning unit 230 has a preprocessing unit 232, a class estimation unit 234, a model generation unit 236, and a model update unit 239.

The preprocessing unit 232 is connected to the class estimation unit 234, and is configured to preprocess at least one piece of data of the plurality of cultivation conditions or the plurality of cultivation results supplied from the storage unit 220, and supply the preprocessed data to the class estimation unit 234. The preprocessing unit 232 may perform the preprocessing for learning.

The class estimation unit 234 is connected to the model generation unit 236, the cultivation result estimation unit 240, and the model update unit 239, and is configured to classify the plurality of cultivation conditions into a plurality of classes. The class estimation unit 234 may supply data such as a plurality of classified cultivation conditions to the model generation unit 236, the cultivation result estimation unit 240, and the model update unit 239.

The model generation unit 236 is configured to generate, by using the cultivation condition and the cultivation result, the model 238 that predicts the cultivation result from the cultivation condition, and store the model 238 in the learning unit 230. The model generation unit 236 may generate the model 238 by using at least one of the data stored in the storage unit 220, the preprocessed data, or a result of the classification (classified data).

The model update unit 239 updates the model 238 by using the cultivation condition and the cultivation result. The model update unit 239 may update the model 238 by using at least one of the data stored in the storage unit 220, the preprocessed data, or the result of the classification (the classified data). The model update unit 239 may update the model 238 by using the data acquired by the acquisition unit 210 after the model generation unit 236 generates the model 238.

The cultivation result estimation unit 240 is connected to the calculation unit 250, and is configured to use the model 238 stored in the learning unit 230, predict the cultivation result from the cultivation condition in the cultivation of the plant, and supply the prediction result to the calculation unit 250. In the reliability calculation operation, the cultivation result estimation unit 240 may supply the predicted cultivation result to the calculation unit 250 together with at least one of the cultivation condition used for the prediction or the corresponding cultivation result. The cultivation result estimation unit 240 may predict the cultivation result from the cultivation condition data 222 stored in the storage unit 220 or the cultivation condition input by the user.

The calculation unit 250 is connected to the output unit 260, and is configured to use the plurality of cultivation conditions and the plurality of cultivation results, and calculate the reliability in each of the plurality of classes for the model 238 that predicts the cultivation result from the cultivation condition. In the reliability calculation operation, the calculation unit 250 may calculate the reliability by using the cultivation result predicted by the cultivation result estimation unit 240, the plurality of cultivation results stored in the storage unit 220, and the result of the classification (the classified data) in the class estimation unit 234. The calculation unit 250 may store the calculated reliability of the plurality of classes in the calculation unit 250. In the prediction result output operation, the calculation unit 250 may supply, to the output unit 260, the reliability together with the predicted cultivation result in response to the input or the like from the user to the support device 200.

The output unit 260 is connected to the display device 300, and is configured to output data according to the cultivation result predicted by the cultivation result estimation unit 240. In the prediction result output operation, the output unit 260 may output the data according to the predicted cultivation result based on the reliability supplied from the calculation unit 250.

The display device 300 may be a display such as a computer or a touch panel display. The display device 300 may display, on a display screen, at least one of the reliability or the predicted cultivation result according to the data received from the output unit 260. The display device 300 may receive a prediction request for the cultivation result from the user, and transmit the prediction request to the support device 200. It should be noted that the display device 300 may be a part of the support device 200 or a part of the terminal 110.

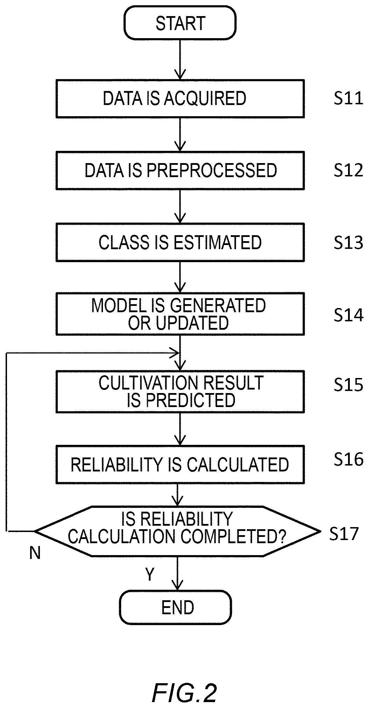

Fig. 2 is a flow showing an example of an operation of the cultivation support system 10. The flow of Fig. 2 shows an example of the reliability calculation operation of the cultivation support system 10.

In S11, the acquisition unit 210 acquires the cultivation condition and the cultivation result in the cultivation of the plant. The cultivation condition acquisition unit 212 may acquire the cultivation condition data 222 in real time or periodically from the plurality of sensors 100 and terminals 110. The cultivation condition acquisition unit 212 may acquire a measured value or the set value of the cultivation condition via the sensor 100 or the terminal 110. The cultivation condition acquisition unit 212 may store the acquired cultivation condition data 222 in the storage unit 220 in association with at least one of a type of the plant, an identifier, a date and time of detection, or a date and time of acquisition.

Here, the identifier of the plant may be set for each cultivation unit of the plant by the user or the support device 200. For the identifier of the plant, one identifier may be set with a plurality of strains under the same cultivation condition (for example, the same cultivation start date, the same cultivation area, the same cultivation period, or the like) being one cultivation unit.

The cultivation result acquisition unit 214 may acquire the cultivation result data 224 in real time or periodically from the plurality of sensors 100 and the terminals 110. The cultivation result acquisition unit 214 may acquire, from the sensor 100 and the terminal 110, data indicating at least one of the occurrence of the injury, the quality, or a yield of the harvested plant. The cultivation result acquisition unit 214 may acquire, via the terminal 110, data obtained by the grower labeling the plant by a visual check or the like with respect to at least one of the occurrence of the injury, the quality of the plant, or the yield. The cultivation result acquisition unit 214 may acquire a state of the occurrence of the injury detected by an image diagnosis or the like by the sensor 100. The cultivation result acquisition unit 214 may generate an injury detection model, which outputs the state of the occurrence of the injury from an image, by learning by using training data labeled in advance by the grower or the like. The cultivation result acquisition unit 214 may perform the image diagnosis by using the injury detection model, and acquire cultivation result data. The cultivation result acquisition unit 214 may store the acquired cultivation result data 224 in the storage unit 220 in association with at least one of the type of the plant, the identifier, the cultivation condition, the date and time of detection, or the date and time of acquisition.

In S12, the preprocessing unit 232 preprocesses the cultivation condition data 222 and the cultivation result data 224. The preprocessing unit 232 may receive the cultivation condition data 222 and the cultivation result data 224 from the storage unit 220. The preprocessing unit 232 may perform the preprocessing including: at least one of associating data of the plurality of cultivation conditions and data of the plurality of cultivation results on a time axis; complementing at least one of the data of the plurality of cultivation conditions or the data of the plurality of cultivation results; processing an outlier of at least one of the data of the plurality of cultivation conditions or the data of the plurality of cultivation results; or rounding processing of at least one of the data of the plurality of cultivation conditions or the data of the plurality of cultivation results.

The preprocessing unit 232 may associate the cultivation condition data 222 and the cultivation result data 224 with each other according to a data acquisition time. As an example, the preprocessing unit 232 may associate, according to the data acquisition time, the cultivation condition data 222 and the cultivation result data 224 with each other for each same acquisition date, or at the same time interval on different acquisition dates or the same acquisition date.

The preprocessing unit 232 may perform a defect interpolation of time series data. The preprocessing unit 232 may complement the data by using a complementary algorithm such as linear interpolation or spline complementation during a period when the data does not exist. When data of which a difference from an average value of the plurality of data exceeds a threshold value predetermined by the user, the preprocessing unit 232 may delete the data as an outlier, or change a value of the data to the same value as data before and after on the time axis. The preprocessing unit 232 may perform the rounding processing by rounding the data down to a predetermined digit or less, or the like. The preprocessing unit 232 may discretize the cultivation condition data 222 and the cultivation result data 224 in association with the cultivation area in each cultivation period (the sowing, the raising of seedlings, the permanent planting, the greening).

The preprocessing unit 232 may perform preprocessing of extracting feature amounts of the cultivation condition data 222 and the cultivation result data 224. In at least one of the cultivation condition data 222 or the cultivation result data 224, the preprocessing unit 232 may extract, as a feature amount, at least one of an integrated value, a differential value, an average value, a variance value, or data obtained by separating a daytime component and a nighttime component. The preprocessing unit 232 may calculate, as the feature amount, the integrated value of data for each predetermined period. As an example, the preprocessing unit 232 may extract, as the feature amount, the integrated value of a number of at least one occurrence of the injury, the temperature, the humidity, or the like every three hours. By calculating the integrated value in this way, it is possible to know an effect of a delay. The preprocessing unit 232 may calculate the differential value of the data at a plurality of data acquisition times, and extract the differential value as the feature amount. The preprocessing unit 232 may regard data transitioning on the time axis as a composite wave of the daytime component and the nighttime component, and complement one of the daytime component and the nighttime component (for example, the spline complementation), or separate the one of the daytime component and the nighttime component by a frequency decomposition method (for example, a Fourier transform or the like). Then, the preprocessing unit 232 may separate a difference between the separated one of the daytime component and the nighttime component, and the sensor data, as the other of the daytime component and the nighttime component.

The preprocessing unit 232 may divide the preprocessed data by sections such as the cultivation period or a time zone (daytime and nighttime), and create a data set by setting, as an explanatory variable, the preprocessed data (the average value, the variance value, or the like) for each section. The preprocessing unit supplies a preprocessed data set to the class estimation unit 234.

In S13, the class estimation unit 234 classifies (clustering) a plurality of pieces of preprocessed cultivation condition data 222 into a plurality of classes. The class estimation unit 234 may classify a plurality of identifiers of the plants into a plurality of classes (groups) in which data sets of cultivation conditions are similar to each other. The class estimation unit 234 may classify the data based on at least one of a similarity of a time series or a similarity of a feature amount, or the like for data. As an example, the class estimation unit 234 may classify, into the same class, data in the same time zone on different acquisition dates. In addition, the class estimation unit 234 may classify, into the same class, pieces of data in which a similarity in vectorized data is higher than a threshold value (for example, a distance is smaller than the threshold value). As an example, the class estimation unit 234 may classify, into the same class, data sets in which a difference between extracted feature amounts is lower than or equal to the threshold value and which correspond to each other.

The class estimation unit 234 may perform the classification by using a k-means method, a probabilistic latent semantic analysis (pLSA: Probabilistic Latent Semantic Analysis) or the like.

The class estimation unit 234 may create a class estimation model by setting a result of the classification as an objective variable and setting the data set created in S12 as the explanatory variable. The class estimation model may be created by using machine learning of a Bayesian network or the like. The class estimation unit 234 may estimate the class of the data of the cultivation condition by using the class estimation model, in the later prediction result output operation. In addition, the class estimation unit 234 may store class information used to generate the model 238, in the class estimation unit 234, for use for the later prediction result output operation.

After the clustering, the class estimation unit 234 may supply, to the model generation unit 236, a part of the cultivation condition data 222 and a part of the corresponding cultivation result data 224, as data for generating the model. After the clustering, the class estimation unit 234 may supply, to the cultivation result estimation unit 240, the other part of the cultivation condition data 222 and the other part of the corresponding cultivation result data 224, as data for calculating the reliability. The class estimation unit 234 may divide the data for generating the model and the data for calculating the reliability to calculate the reliability by using cross validation or the like. The class estimation unit 234 may randomly divide the data for generating the model and the data for calculating the reliability. In addition, the class estimation unit 234 may divide the data for generating the model and the data for calculating the reliability by a data acquisition period (for example, the daytime and the nighttime, a date, a month).

In S14, the model generation unit 236 generates the model 238 by performing the machine learning by using the result of the classification (the classified data). The model generation unit 236 may receive, as the data for generating the model, parts of the plurality of cultivation conditions acquired by the cultivation condition acquisition unit 212 and the plurality of cultivation results acquired by the cultivation result acquisition unit 214, from the class estimation unit 234, and use the data for generating the model to generate the model 238. The model generation unit 236 may use the plurality of cultivation conditions classified into the plurality of classes and the plurality of cultivation results, and generate a model of a Bayesian network model structure. In addition, the model generation unit 236 may generate another machine learning model such as a neural network.

In addition, in S14, when the model 238 is already stored in the learning unit 230, the model update unit 239 uses the result of the classification (the classified data) to update the model 238. The model update unit 239 may perform the machine learning similarly to the model generation unit 236, and update the model 238 of the Bayesian network model structure. The model update unit 239 may update the model 238 by comparing the cultivation result under the cultivation condition of the executed plant cultivation, with the cultivation result predicted by the model 238 from the cultivation condition.

In S15, the cultivation result estimation unit 240 predicts the cultivation result by using the model 238. The cultivation result estimation unit 240 may receive, from the class estimation unit 234, the data for calculating the reliability including the result of the classification (the classified data), and use the model 238 to predict the cultivation result from the data. The cultivation result estimation unit 240 may use the model 238 to predict one cultivation result having a highest probability or having a probability exceeding a threshold value from the cultivation condition corresponding to one identifier. The cultivation result estimation unit 240 may supply, to the calculation unit 250, the predicted cultivation result together with the data for calculating the reliability used for the prediction.

In S16, the calculation unit 250 uses the data received from the cultivation result estimation unit 240, and calculates the reliability in each of the plurality of classes. For a class to which the cultivation condition used for the prediction by the cultivation result estimation unit 240 is estimated to belong, the calculation unit 250 may compare an actual cultivation result of the cultivation condition with the predicted cultivation result, and calculate the reliability (an accuracy rate). The calculation unit 250 may calculate the reliability for each identifier and calculate one final reliability from a plurality of reliabilities for each class. The calculation unit 250 may calculate, for one class, an average value or a total value of the plurality of reliabilities calculated for the plurality of identifiers, as the final reliability of the class. The calculation unit 250 may calculate the reliability by using at least one of a recall rate, a precision rate, or an F value.

In S17, the calculation unit 250 may determine whether the reliability has been calculated by using all the data for calculating the reliability. The calculation unit 250 may repeat S15 to S17 until all the data for calculating the reliability are used.

In addition, the calculation unit 250 may change the data for calculating the reliability, and repeat the calculation of the reliability. After calculating the reliability by using all the data for calculating the reliability, similarly to S13, the class estimation unit 234 may divide the data after the classification into the data for generating the model and the data for calculating the reliability, so that the data after the classification is different from the data of a previous time. As an example, the class estimation unit 234 may use a random seed changed from the previous time, and randomly divide the data. Then, the calculation unit 250 may use the data for calculating the reliability, which is different from the data of the previous time, and calculate the reliability. In this way, the calculation unit 250 may set, as the final reliability, a value (the average value or the like) obtained from the plurality of reliabilities for each class obtained by repeating the calculation of the reliability multiple times (that is, repeating of S13, S15, and S16) while changing the data for calculating the reliability. This makes it possible to enhance a precision of a reliability assessment of the class.

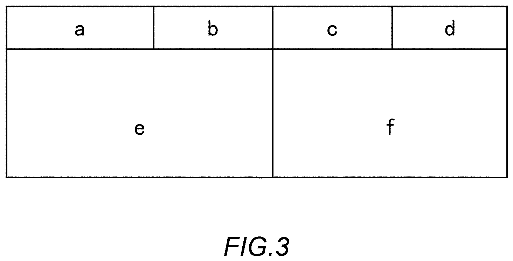

Fig. 3 shows an example of a layout of a plant factory in which a plant is cultivated in the cultivation support system 10. The cultivation area of the plant factory is divided into a plurality of cultivation areas a to f, and one or more sensors 100 are installed in each area. The cultivation unit of the plant, which is identified by one identifier, is cultivated in one cultivation area for a predetermined cultivation period. The cultivation area can be changed depending on the cultivation period. The acquisition unit 210 can acquire information on the cultivation area as the cultivation condition via the sensor 100 or the terminal 110.

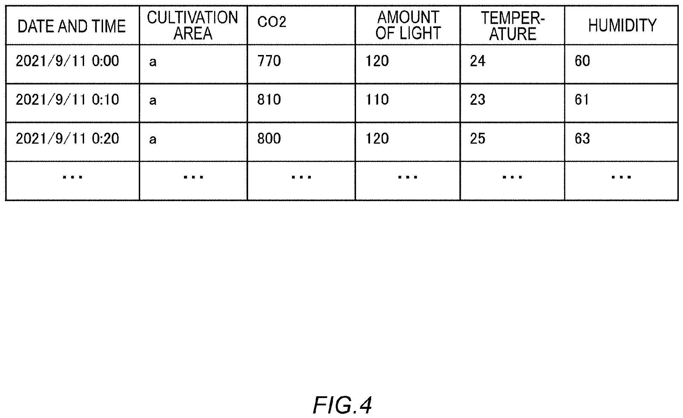

Fig. 4 shows an example of a part of cultivation condition data 222 that is stored in a storage unit 220. The cultivation condition acquisition unit 212 may acquire, via the sensor 100 or the terminal 110, the data of the cultivation area, the carbon dioxide concentration, the amount of light, the temperature, the humidity, or the like, and store the data in the storage unit 220 in association with the date and time of detection.

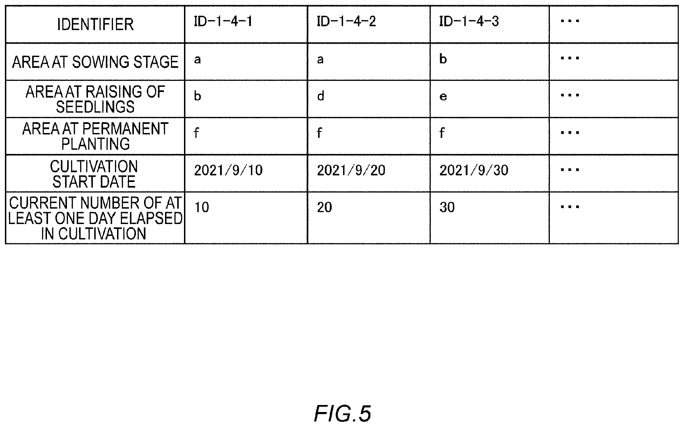

Fig. 5 shows an example of another part of the cultivation condition data 222 that is stored in the storage unit 220. The cultivation condition acquisition unit 212 may acquire the cultivation condition in association with the identifier of the cultivation unit, and store the cultivation condition in the storage unit 220. As an example, for the identifier, ID-1-4-1, ID-1-4-2, and ID-1--4-3, ... are set for each cultivation unit. Each identifier is associated with information on the cultivation area, the cultivation start date, and a current number of at least one day elapsed in cultivation at each cultivation stage (the sowing (the greening), the raising of seedlings, the permanent planting). In the present example, one identifier is set to a plurality of strains, which have the same cultivation area and the same cultivation start date at each cultivation stage (sowing (greening), the raising of seedlings, the permanent planting), as one cultivation unit.

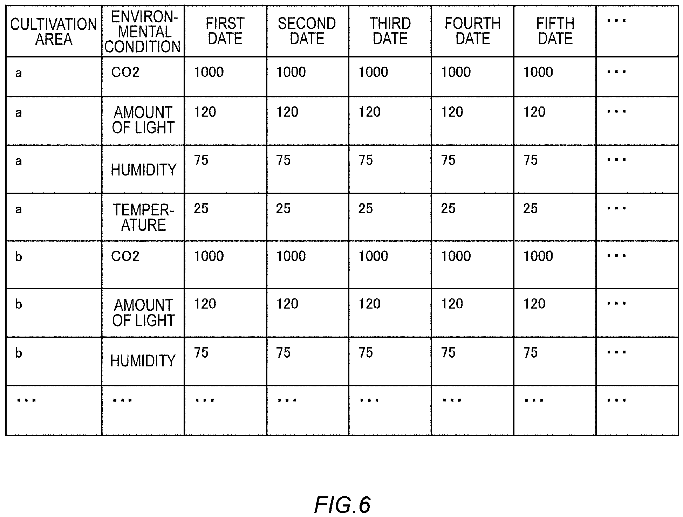

Fig. 6 shows an example of another part of the cultivation condition data 222 that is stored in the storage unit 220. The cultivation condition acquisition unit 212 may acquire the set value for each cultivation area as the cultivation condition, and store the set value in the storage unit 220. In Fig. 6, the storage unit 220 stores, every day, the set values of the carbon dioxide concentration, the amount of light, the humidity, and the temperature in the cultivation area a and the cultivation area b.

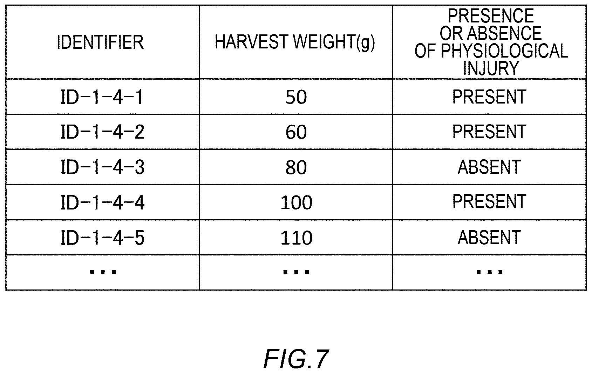

Fig. 7 shows an example of cultivation result data 224 that is stored in the storage unit 220. The cultivation result acquisition unit 214 acquires a harvest weight and a presence or absence of the physiological injury for the storage in the storage unit 220 in association with the identifier.

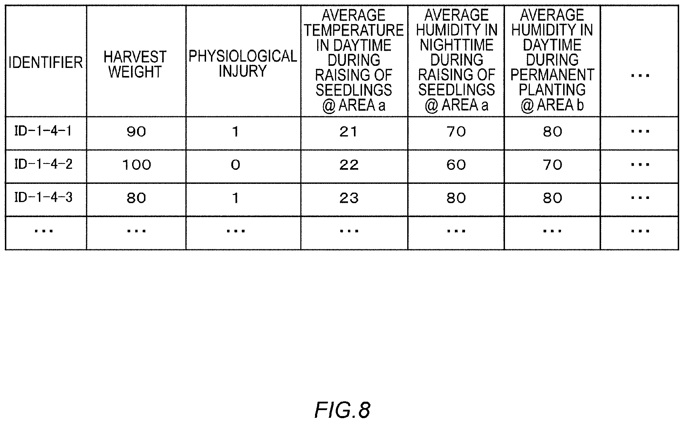

Fig. 8 shows an example of a preprocessed data set. The preprocessing unit 232 may respectively preprocess the cultivation conditions corresponding to the identifiers ID-1-4-1, ID-1-4-2, and ID-1--4-3, ..., and create a data set as shown in Fig. 8. For the cultivation unit of the identifier ID-1-4-1, a harvest weight is 90 g which is the result of cultivation, there is the occurrence of the physiological injury; the cultivation has been performed in the cultivation area a during a period of the raising of seedlings, and the average value of the temperature in the daytime (9:00 to 16:00) is 21°C, and the average value of the humidity in the nighttime (16:00 to 9:00) is 70%; and the cultivation has been performed in the cultivation area b during a period of the permanent planting, and the average value of the humidity in the daytime (9:00 to 16:00) is 80%. For the cultivation unit of the identifier ID-1-4-2, the harvest weight is 100 g which is the result of cultivation, there is no occurrence of the physiological injury; the cultivation has been performed in the cultivation area a during the period of the raising of seedlings, and the average value of the temperature in the daytime (9:00 to 16:00) is 22°C, and the average value of the humidity in the nighttime (16:00 to 9:00) is 60%; and the cultivation has been performed in the cultivation area b during the period of the permanent planting, and the average value of the humidity in the daytime (9:00 to 16:00) is 70%.

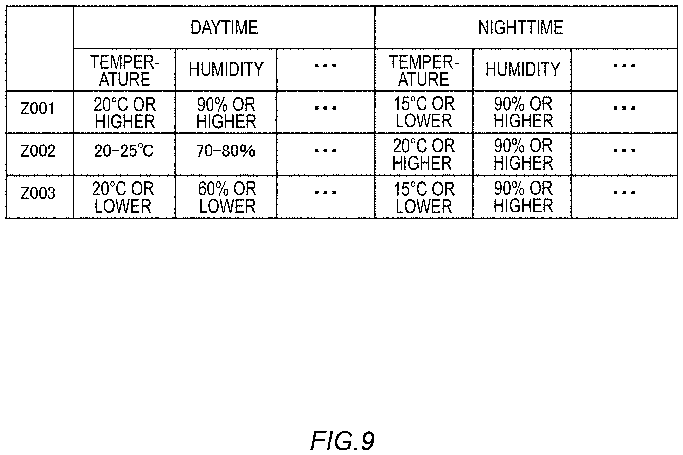

Fig. 9 shows an example of a feature amount of data for each class which is classified by a class estimation unit 234. The class estimation unit 234 can classify the cultivation conditions into classes Z001, Z002, Z003. For example, in class Z001, the identifier, which has the cultivation conditions such as an average temperature of 20°C or higher in the daytime, average humidity of 90% or higher in the daytime, an average temperature of 15 °C or higher in the nighttime, and average humidity of 90% or higher in the nighttime, is classified. It should be noted that the cultivation conditions in Fig. 9 may be the preprocessed data.

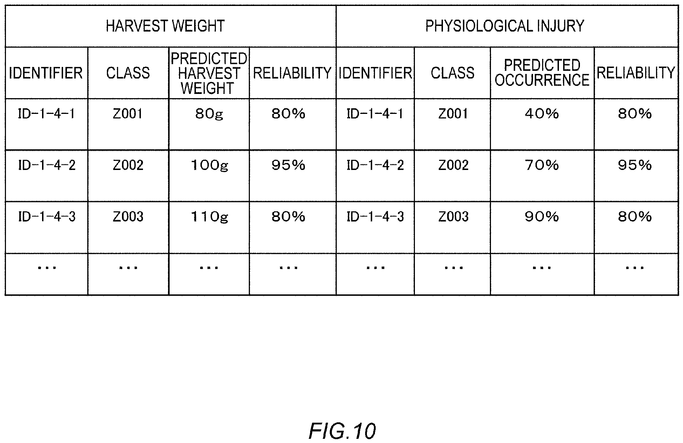

Fig. 10 shows an example of reliability which is calculated for each identifier from a prediction result obtained by a calculation unit 250. The calculation unit 250 may receive the prediction result for each identifier from the cultivation result estimation unit 240, compare the prediction result with the actual cultivation result, and calculate a matching degree as the reliability. As an example, for the cultivation unit of the identifier ID1-4-1, from the class Z001, the predicted harvest weight of 80g, and a predicted occurrence frequency of the physiological injury of 40%, by using an actual harvest weight of the cultivation result (for example, 100 g), and an actual occurrence frequency of the physiological injury (for example, 50%), the calculation unit 250 may respectively calculate the reliabilities of 80% (100×the predicted harvest weight/the actual harvest weight, and 100×the predicted occurrence frequency/the actual occurrence frequency).

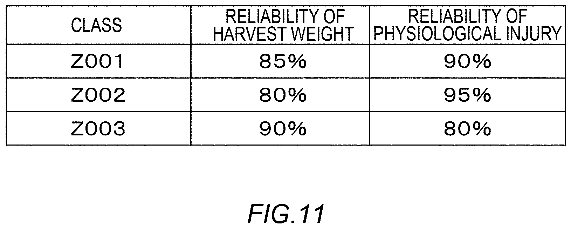

Fig. 11 shows an example of reliability for each class which is calculated from the prediction result obtained by the calculation unit 250. The calculation unit 250 may calculate the reliability for each class from the reliability of each identifier calculated as shown in Fig. 10. For the harvest weight, the calculation unit 250 may calculate the average value of the reliability of 80% of the identifier ID 1-4-1 belonging to the class Z001, and the reliabilities of the plurality of other identifiers, and set the reliability of 85% for the harvest weight of the class Z001. For the physiological injury, the calculation unit 250 may calculate the average value of the reliability of 80% of the identifier ID 1-4-1 belonging to the class Z001, and the reliabilities of the plurality of other identifiers, and set the reliability of 90% for the physiological injury of the class Z001. The calculation unit 250 may store the calculated reliability for each class as a table as shown in Fig. 11.

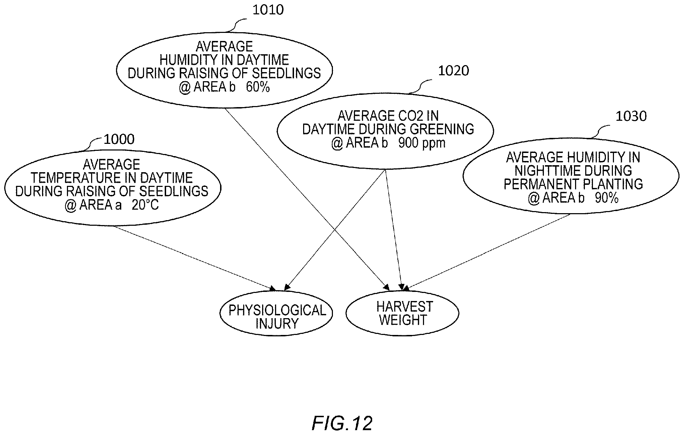

Fig. 12 shows an example of a model 238 of a Bayesian network model structure that is generated by a model generation unit 236. When the data of the preprocessed cultivation condition is input, the model 238 outputs at least one of the physiological injury and the harvest weight. The cultivation condition of a node 1000 is that the cultivation is performed in the cultivation area a during the period of the raising of seedlings, and the average value of the temperature in the daytime (9:00 to 16:00) is 20°C. The cultivation condition of the node 1000 affects the occurrence of the physiological injury in a direction of an arrow. The cultivation condition of a node 1010 is that the cultivation is performed in the cultivation area b during the period of the raising of seedlings, and the average value of the humidity in the daytime (9:00 to 16:00) is 60%. The cultivation condition of the node 1010 affects the harvest weight in the direction of the arrow. The cultivation condition of the node 1020 is that the cultivation is performed in the cultivation area b during a period of the greening, and the average value of the carbon dioxide concentration in the daytime (9:00 to 16:00) is 900 ppm. The cultivation condition of the node 1020 affects the physiological injury and the harvest weight in the directions of arrows. The cultivation condition of a node 1030 is that the cultivation is performed in the cultivation area b during the period of the permanent planting, and the average value of the humidity in the nighttime (16:00 to 9:00) is 90%. The cultivation condition of the node 1030 affects the harvest weight in the direction of the arrow. It should be noted that each numerical value such as the average value is a value obtained by the preprocessing by the preprocessing unit 232, and for example, the average value of 60% is a value obtained by performing the rounding processing on a range of average values of 55% to 64%.

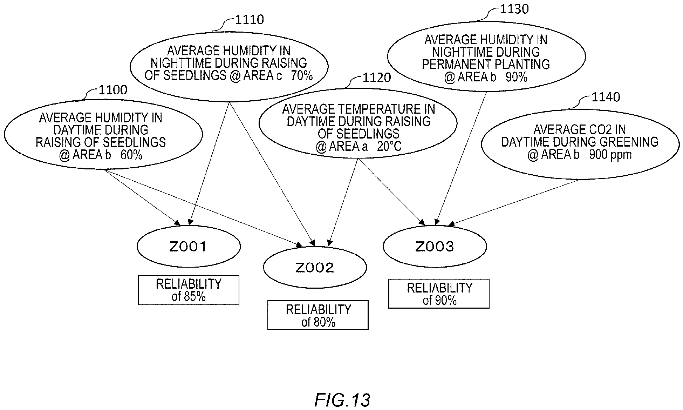

Fig. 13 shows an example of a class estimation model of a Bayesian network model structure that is generated by the class estimation unit 234. When the preprocessed cultivation condition data is input, the class estimation model is classified into any of the plurality of classes. The calculated reliability is associated with each class.

The cultivation condition of a node 1100 is that the cultivation is performed in the cultivation area b during the period of the raising of seedlings, and the average value of the humidity in the daytime (9:00 to 16:00) is 60%. The cultivation condition of the node 1100 is weight 60 which is classified into the class Z001, and weight 40 classified into the class Z002. The cultivation condition of a node 1110 is that the cultivation is performed in the cultivation area c during the period of the raising of seedlings, and the average value of the humidity in the nighttime (16:00 to 9:00) is 70%. The cultivation condition of the node 1110 is weight 30 which is classified into the class Z001, and weight 70 which is classified into the class Z002. The cultivation condition of a node 1120 is that the cultivation is performed in the cultivation area a during the period of the raising of seedlings, and the average value of the temperature in the daytime (9:00 to 16:00) is 20°C. The cultivation condition of the node 1120 is weight 50 which is classified into the class Z002, and weight 50 which is classified into the class Z003. The cultivation condition of a node 1130 is that the cultivation is performed in the cultivation area b during the period of the permanent planting, and the average value of the humidity in the nighttime (16:00 to 9:00) is 90%. The cultivation condition of the node 1130 is weight 100 which is classified into the class Z003. The cultivation condition of the node 1140 is that the cultivation is performed in the cultivation area b during the period of the greening, and the average value of the carbon dioxide concentration in the daytime (9:00 to 16:00) is 900 ppm. The cultivation condition of the node 1140 is weight 100 which is classified into the class Z003.

When the plurality of cultivation conditions corresponding to one identifier are respectively classified into the plurality of classes, the class estimation unit 234 may classify the identifier into a class having a largest total value of the weight.

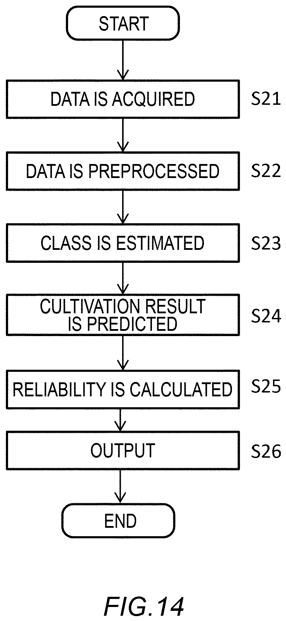

Fig. 14 is a flow showing an example of a prediction result output operation of the cultivation support system 10. In S21, similarly to S11, the acquisition unit 210 acquires the cultivation condition in the cultivation of the plant. The acquisition unit 210 may acquire the cultivation condition in response to the support device 200 receiving the prediction request from the user. The acquisition unit 210 may acquire the cultivation condition in association with one identifier. In S22, similarly to S12, the preprocessing unit 232 preprocesses the cultivation condition data 222.

In S23, similarly to S13, the class estimation unit 234 classifies the preprocessed cultivation condition data 222 into the class. The class estimation unit 234 may classify the cultivation condition used for predicting the cultivation result into at least one of the plurality of classes. The class estimation unit 234 may classify the cultivation condition, which is used for the prediction of the cultivation result estimation unit 240, into any of the plurality of classes (for example, the classes Z001, Z002, Z003 ... in Fig. 10) into which the plurality of cultivation conditions are classified in generating the model 238. The class estimation unit 234 may classify the cultivation condition data 222 corresponding to one identifier into one class by using the class estimation model as shown in Fig. 13. The class estimation unit 234 may supply the classified data to the cultivation result estimation unit 240.

**In** S24, the cultivation result estimation unit 240 predicts the cultivation result corresponding to one identifier by using the model 238 from the data supplied from the class estimation unit 234. The cultivation result estimation unit 240 may perform the prediction, similarly to S14. The cultivation result estimation unit 240 supplies the predicted cultivation result to the calculation unit 250.

**In** S25, the calculation unit 250 may acquire, from the table or the like, the reliability corresponding to the class into which the identifier is classified, and supply the predicted cultivation result to the output unit 260 together with the reliability.

**In** S26, the output unit 260 outputs the data according to the predicted cultivation result based on the reliability in the classified class. The output unit 260 may output the predicted cultivation result together with the reliability in the classified class. The display device 300 can display the predicted cultivation result and the reliability thereof.

In addition, the output unit 260 may output the data according to the predicted cultivation result when the reliability in the classified class is higher than or equal to a first threshold value. In this case, the display device 300 can display only the prediction of the cultivation result of which the reliability is high.

It should be noted that when the reliability in the classified class is higher than or equal to the first threshold value, the output unit 260 may output data for controlling the cultivation condition of the plant to a management device or the like that manages the plant cultivation condition. As an example, when the cultivation result, which is predicted with high reliability, is determined to be poor (for example, the predicted harvest weight is less than a second threshold value, or a probability of the occurrence of the injury exceeds a third threshold value), the output unit 260 may output, to the management device or the like, control data for changing the cultivation condition used for the prediction. The output unit 260 may receive the cultivation condition which is obtained by using the model 238 and of which the cultivation result is good, and output the control data for the change from the cultivation condition of which the predicted cultivation result is poor, to the cultivation condition of which the cultivation result is good.

The cultivation support system 10 of the present embodiment makes it possible for the user to grasp the reliability of the prediction together with the cultivation result. In the related art, when the cultivation results of all seasons are predicted by one model, there is a problem that it is not possible to grasp the precision of the prediction result because the data used for the prediction has a different tendency from the training data. The cultivation support system 10 makes it possible to grasp the reliability of the prediction result by using one harvest result prediction model that covers all seasons by combining a clustering method and the machine learning.

It should be noted that in S23, when the class estimation unit 234 cannot classify the cultivation condition for the prediction into any of the existing classes used for generating the model (for example, a similarity of the cultivation condition for the prediction, to the data of the existing class, is less than the threshold value or the like), the output unit 260 may not output the predicted cultivation result. In this case, the output unit 260 may output a display to be unpredictable, instead of the predicted cultivation result.

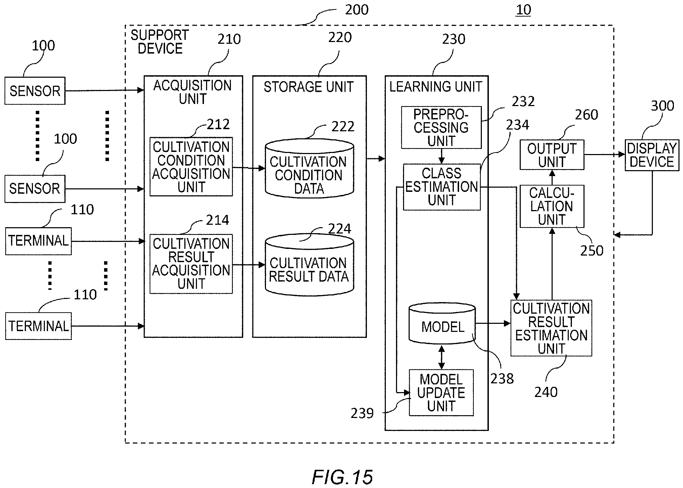

Fig. 15 shows a configuration of another example of the cultivation support system 10 according to the present embodiment. The cultivation support system 10 in the other example may have a similar configuration to that of the cultivation support system 10 of Fig. 1, and perform the similar operation, and it should be noted that the model generation unit 236 is not included. The cultivation support system 10 in the other example may mainly perform the prediction result output operation shown in Fig. 14.

The cultivation support system 10 of the other example may store the model 238 and the class estimation model that have learned in advance by an external device. The cultivation result estimation unit 240 of the cultivation support system 10 of the other example may perform the cultivation result estimation processing by using the model 238, similarly to the cultivation result estimation unit 240 of the support device 200 of Fig. 1. The class estimation unit 234 of the cultivation support system 10 of the other example may perform the clustering processing by using the class estimation model, similarly to the class estimation unit 234 of the support device 200 of Fig. 1. The calculation unit 250 may acquire the reliability corresponding to the classified class from the table or the like in which the reliability is stored, without calculating the reliability. In the other configuration and operation, the cultivation support system 10 of the other example may be similar to the cultivation support system 10 of Fig. 1, and the detailed description is omitted.

In addition, various embodiments of the present invention may be described with reference to flowcharts and block diagrams whose blocks may represent (1) steps of processes in which operations are executed or (2) sections of apparatuses responsible for executing operations. Certain steps and "sections" may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits and may include integrated circuits (IC) and/or discrete circuits. Programmable circuitry may include reconfigurable hardware circuits comprising logical AND, OR, XOR, NAND, NOR, and other logical operations, flip-flops, registers, memory elements, etc., such as field-programmable gate arrays (FPGA), programmable logic arrays (PLA), and the like.

A computer-readable medium may include any tangible device that can store instructions to be executed by a suitable device, and as a result, the computer-readable medium having instructions stored in the tangible device comprises an article of manufacture including instructions which can be executed to create means for executing operations specified in the flowcharts or block diagrams. Examples of the computer-readable medium may include an electronic storage medium, a magnetic storage medium, an optical storage medium, an electromagnetic storage medium, a semiconductor storage medium, etc. Specific examples of the computer-readable medium may include a floppy (Registered Trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a portable compact disc read-only memory (CD-ROM), a digital versatile disc (DVD), a Blu-ray (Registered Trademark) disc, a memory stick, an integrated circuit card, or the like.

Computer-readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk (registered trademark), JAVA (registered trademark), C++, etc., and conventional procedural programming languages, such as the "C" programming language or similar programming languages.

Computer-readable instructions may be provided to a processor of a general-purpose computer, special purpose computer, or other programmable data processing apparatus, or to programmable circuitry, locally or via a local area network (LAN), wide area network (WAN) such as the Internet, etc., so that the computer-readable instructions are executed to create means for executing operations specified in the flowcharts or block diagrams. Examples of the processor include a computer processor, a processing unit, a microprocessor, a digital signal processor, a controller, a microcontroller, and the like.

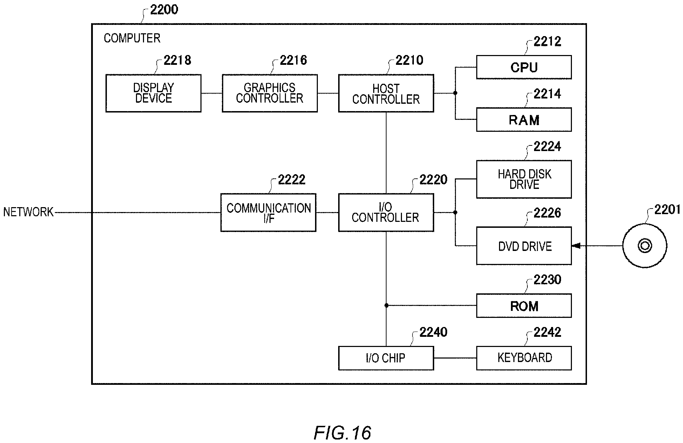

Fig. 16 shows an example of a computer 2200 in which a plurality of aspects of the present invention may be entirely or partially embodied. A program that is installed in the computer 2200 can cause the computer 2200 to function as operations associated with apparatuses according to the embodiments of the present invention or one or more sections of the apparatuses, or can cause the computer 2200 to execute the operations or the one or more sections thereof, and/or can cause the computer 2200 to execute processes according to the embodiments of the present invention or steps of the processes. Such a program may be executed by a CPU 2212 to cause a computer 2200 to execute certain operations associated with some or all of the blocks of flowcharts and block diagrams described herein.

The computer 2200 according to the present embodiment includes the CPU 2212, a RAM 2214, a graphics controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in the graphics controller 2216 itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from a DVD-ROM 2201, and provides the hard disk drive 2224 with the programs or the data via the RAM 2214. The IC card drive reads the programs and the data from the IC card, and/or writes the programs and the data to the IC card.

The ROM 2230 stores therein a boot program or the like executed by the computer 2200 at the time of activation, and/or a program depending on the hardware of the computer 2200. The input/output chip 2240 may also connect various input/output units to the input/output controller 2220 via a parallel port, a serial port, a keyboard port, a mouse port, and the like.

A program is provided by the computer-readable medium such as the DVD-ROM 2201 or the IC card. The program is read from the computer-readable medium, installed in the hard disk drive 2224, the RAM 2214, or the ROM 2230, which is also an example of the computer-readable medium, and executed by the CPU 2212. The information processing written in these programs is read into the computer 2200, resulting in cooperation between a program and the above-mentioned various types of hardware resources. An apparatus or method may be constituted by realizing the operation or processing of information in accordance with the usage of the computer 2200.

For example, when a communication is executed between the computer 2200 and an external device, the CPU 2212 may execute a communication program loaded in the RAM 2214, and instruct the communication interface 2222 to process the communication based on the processing written in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (the DVD-ROM 2201), the IC card, etc., and execute various types of processing on the data on the RAM 2214. The CPU 2212 then writes back the processed data to the external recording medium.

Various types of information, such as various types of programs, data, tables, and databases, may be stored in the recording medium to undergo information processing. The CPU 2212 may execute various types of processing on the data read from the RAM 2214 to write back a result to the RAM 2214, the processing being described throughout the present disclosure, specified by instruction sequences of the programs, and including various types of operations, information processing, condition determinations, conditional branching, unconditional branching, information retrievals/replacements, or the like. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-described program or software modules may be stored in the computer-readable medium on the computer 2200 or near the computer 2200. In addition, a recording medium such as a hard disk or a RAM provided in a server system connected to a dedicated communication network or the Internet can be used as a computer-readable medium, thereby providing the program to the computer 2200 via the network.

While the embodiments of the present invention have been described, the technical scope of the invention is not limited to the above-described embodiments. It is apparent to persons skilled in the art that various alterations and improvements can be added to the above-described embodiments.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 cultivation support system
100 sensor
110 terminal
200 support device
210 acquisition unit
212 cultivation condition acquisition unit
214 cultivation result acquisition unit
220 storage unit
222 cultivation condition data
224 cultivation result data
230 learning unit
232 preprocessing unit
234 class estimation unit
236 model generation unit
238 model
239 model update unit
240 cultivation result estimation unit
250 calculation unit
260 output unit
300 display device
2200 computer
2201 DVD-ROM
2210 host controller
2212 CPU
2214 RAM
2216 graphics controller
2218 display device
2220 input/output controller
2222 communication interface
2224 hard disk drive
2226 DVD-ROM drive
2230 ROM
2240 input/output chip
2242 keyboard

## Claims

1. A cultivation support system comprising:
a cultivation condition acquisition unit (212) configured to acquire a plurality of cultivation conditions for cultivating a plant, each cultivation condition including an environmental condition in which the plant has been cultivated;
a cultivation result acquisition unit (214) configured to acquire a plurality of cultivation results in a cultivation of the plant, each cultivation result including at least one of an injury in the cultivation of the plant or a harvest result of the cultivated plant;
a class estimation unit (234) configured to perform clustering of the plurality of cultivation conditions acquired by the cultivation condition acquisition unit (212) to classify the plurality of cultivation conditions into a plurality of classes in which data sets of cultivation conditions are similar to each other;
a calculation unit (250) configured to calculate reliability in each of the plurality of classes for a model that predicts a cultivation result from a cultivation condition by using the plurality of cultivation conditions and the plurality of cultivation results;
a cultivation result estimation unit (240) configured to predict the cultivation result from the cultivation condition in the cultivation of the plant by using the model; and
an output unit (260) configured to output data according to the predicted cultivation result, wherein
the class estimation unit (234) is configured to classify the cultivation condition used for predicting the cultivation result into at least one of the plurality of classes, and
the output unit (260) is configured to output the data according to the predicted cultivation result based on the reliability in the plurality of classes into which the plurality of cultivation conditions are classified.

2. The cultivation support system according to claim 1, comprising a model generation unit (236) configured to generate the model that predicts the cultivation result from the cultivation condition.

3. The cultivation support system according to claim 2, wherein
the model generation unit (236) is configured to generate a model of a Bayesian network model structure.

4. The cultivation support system according to claim 3, wherein
the class estimation unit (234) is configured to classify, into the plurality of classes, the plurality of cultivation conditions acquired by the cultivation condition acquisition unit (212), and
the model generation unit (236) is configured to generate the model of the Bayesian network model structure by using the plurality of cultivation conditions classified into the plurality of classes and the plurality of cultivation results.

5. The cultivation support system according to any one of claims 2 to 4, wherein
the model generation unit (236) is configured to generate the model by using parts of the plurality of cultivation conditions acquired by the cultivation condition acquisition unit (212) and the plurality of cultivation results acquired by the cultivation result acquisition unit (214), and
the calculation unit (250) is configured to calculate the reliability by using other parts of the plurality of cultivation conditions acquired by the cultivation condition acquisition unit (212) and the plurality of cultivation results acquired by the cultivation result acquisition unit (214).

6. The cultivation support system according to any one of claims 1 to 5, comprising:
a preprocessing unit (232) configured to preprocess at least one piece of data of the plurality of cultivation conditions or the plurality of cultivation results, wherein
the class estimation unit (234) is configured to classify the plurality of cultivation conditions into the plurality of classes by using the preprocessed data, and
the calculation unit (250) is configured to calculate the reliability in each of the plurality of classes by using a result of the classification.

7. The cultivation support system according to claim 6, wherein
the preprocessing unit (232) is configured to perform the preprocessing including: at least one of associating data of the plurality of cultivation conditions and data of the plurality of cultivation results on a time axis; complementing at least one of the data of the plurality of cultivation conditions or the data of the plurality of cultivation results; processing an outlier of at least one of the data of the plurality of cultivation conditions or the data of the plurality of cultivation results; or rounding processing of at least one of the data of the plurality of cultivation conditions or the data of the plurality of cultivation results.

8. The cultivation support system according to any one of claims 1 to 7, wherein
the output unit (260) is configured to execute at least one of outputting the predicted cultivation result together with the reliability in the plurality of classes into which the plurality of cultivation conditions are classified, or outputting the data according to the predicted cultivation result when the reliability in the plurality of classes into which the plurality of cultivation conditions are classified is higher than or equal to a first threshold value.

9. The cultivation support system according to claim 6, wherein
the preprocessing unit (232) is configured to associate data of the plurality of cultivation conditions and data of the plurality of cultivation results according to a data acquisition time.

10. A cultivation support system comprising:
a cultivation condition acquisition unit (212) configured to acquire a cultivation condition for cultivating a plant, the cultivation condition including an environmental condition in which the plant has been cultivated;
a class estimation unit (234) configured to perform clustering of the cultivation condition acquired by the cultivation condition acquisition unit (212) to classify the cultivation condition into any of a plurality of classes in which data sets of cultivation conditions are similar to each other;
a cultivation result estimation unit (240) configured to predict a cultivation result from the cultivation condition in a cultivation of the plant by using a model that predicts a cultivation result from the cultivation condition, the cultivation result including at least one of an injury in the cultivation of the plant or a harvest result of the cultivated plant; and
an output unit (260) configured to output data according to the predicted cultivation result based on reliability in the plurality of classes into which the plurality of cultivation conditions are classified, wherein
the class estimation unit (234) is configured to classify the cultivation condition, which is used for the prediction of the cultivation result estimation unit (240), into any of the plurality of classes into which a plurality of cultivation conditions are classified in generating the model that predicts the cultivation result from the cultivation condition.

11. A computer-implemented method for cultivation support comprising:
acquiring a plurality of cultivation conditions for cultivating a plant, each cultivation condition including an environmental condition in which the plant has been cultivated;
acquiring a plurality of cultivation results in a cultivation of the plant, each cultivation result including at least one of an injury in the cultivation of the plant or a harvest result of the cultivated plant;
performing clustering of the plurality of cultivation conditions acquired to classify the plurality of cultivation conditions into a plurality of classes in which data sets of cultivation conditions are similar to each other;
calculating reliability in each of the plurality of classes for a model that predicts a cultivation result from a cultivation condition by using the plurality of cultivation conditions and the plurality of cultivation results;
predicting the cultivation result from the cultivation condition in the cultivation of the plant by using the model; and
outputting data according to the predicted cultivation result, wherein
the performing clustering of the plurality of cultivation conditions includes classifying the cultivation condition used for predicting the cultivation result into at least one of the plurality of classes, and
the outputting data includes outputting the data according to the predicted cultivation result based on the reliability in the plurality of classes into which the plurality of cultivation conditions are classified.

12. A program that causes a computer to function as:
a cultivation condition acquisition unit (212) configured to acquire a plurality of cultivation conditions for cultivating a plant, each cultivation condition including an environmental condition in which the plant has been cultivated;
a cultivation result acquisition unit (214) configured to acquire a plurality of cultivation results in a cultivation of the plant, each cultivation result including at least one of an injury in the cultivation of the plant or a harvest result of the cultivated plant;
a class estimation unit (234) configured to perform clustering of the plurality of cultivation conditions acquired by the cultivation condition acquisition unit (212) to classify the plurality of cultivation conditions into a plurality of classes in which data sets of cultivation conditions are similar to each other;
a calculation unit (250) configured to calculate reliability in each of the plurality of classes for a model that predicts a cultivation result from a cultivation condition by using the plurality of cultivation conditions and the plurality of cultivation results;
a cultivation result estimation unit (240) configured to predict the cultivation result from the cultivation condition in the cultivation of the plant by using the model; and
an output unit (260) configured to output data according to the predicted cultivation result, wherein
the class estimation unit (234) is configured to classify the cultivation condition used for predicting the cultivation result into at least one of the plurality of classes, and
the output unit (260) is configured to output the data according to the predicted cultivation result based on the reliability in the plurality of classes into which the plurality of cultivation conditions are classified.

13. A computer readable recording medium storing the program according to claim 12.

## Patentansprüche

1. Kultivierungsunterstützungssystem, umfassend:
eine Kultivierungsbedingungserfassungseinheit (212), die dazu konfiguriert ist, eine Vielzahl von Kultivierungsbedingungen zum Kultivieren einer Pflanze zu erfassen, wobei jede Kultivierungsbedingung eine Umweltbedingung einschließt, unter welcher die Pflanze kultiviert wurde;
eine Kultivierungsergebniserfassungseinheit (214), die dazu konfiguriert ist, eine Vielzahl von Kultivierungsergebnissen bei einer Kultivierung der Pflanze zu erfassen, wobei jedes Kultivierungsergebnis mindestens eines von einer Verletzung beim Kultivieren der Pflanze oder eines Ernteergebnisses der kultivierten Pflanze einschließt;
eine Klassenschätzeinheit (234), die dazu konfiguriert ist, ein Clustering der Vielzahl von Kultivierungsbedingungen durchzuführen, die von der Kultivierungsbedingungserfassungseinheit (212) erfasst werden, um die Vielzahl von Kultivierungsbedingungen in eine Vielzahl von Klassen einzuteilen, in denen Datensätze von Kultivierungsbedingungen einander ähnlich sind;
eine Berechnungseinheit (250), die dazu konfiguriert ist, eine Zuverlässigkeit in jeder der Vielzahl von Klassen für ein Modell zu berechnen, das unter Verwendung der Vielzahl von Kultivierungsbedingungen und der Vielzahl von Kultivierungsergebnissen ein Kultivierungsergebnis aus einer Kultivierungsbedingung vorhersagt;
eine Kultivierungsergebnisschätzeinheit (240), die dazu konfiguriert ist, das Kultivierungsergebnis aus der Kultivierungsbedingung bei der Kultivierung der Pflanze unter Verwendung des Modells vorherzusagen; und
eine Ausgabeeinheit (260), die dazu konfiguriert ist, Daten entsprechend dem vorhergesagten Kultivierungsergebnis auszugeben, wobei
die Klassenschätzeinheit (234) dazu konfiguriert ist, die zum Vorhersagen des Kultivierungsergebnisses verwendete Kultivierungsbedingung in mindestens eine der Vielzahl von Klassen einzuteilen, und
die Ausgabeeinheit (260) dazu konfiguriert ist, die Daten entsprechend dem vorhergesagten Kultivierungsergebnis basierend auf der Zuverlässigkeit in der Vielzahl von Klassen auszugeben, in die die Vielzahl von Kultivierungsbedingungen eingeteilt ist.

2. Kultivierungsunterstützungssystem nach Anspruch 1, umfassend eine Modellgenerierungseinheit (236), die dazu konfiguriert ist, das Modell zu generieren, das das Kultivierungsergebnis aus der Kultivierungsbedingung vorhersagt.

3. Kultivierungsunterstützungssystem nach Anspruch 2, wobei
die Modellgenerierungseinheit (236) dazu konfiguriert ist, ein Modell einer Bayes'schen Netzmodellstruktur zu generieren.

4. Kultivierungsunterstützungssystem nach Anspruch 3, wobei
die Klassenschätzeinheit (234) so konfiguriert ist, dass sie die Vielzahl von Kultivierungsbedingungen, die von der Kultivierungsbedingungserfassungseinheit (212) erfasst werden, in die Vielzahl von Klassen einteilt, und
die Modellgenerierungseinheit (236) dazu konfiguriert ist, das Modell der Bayes'schen Netzmodellstruktur unter Verwendung der Vielzahl von in die Vielzahl von Klassen eingeteilten Kultivierungsbedingungen und der Vielzahl von Kultivierungsergebnissen zu generieren.

5. Kultivierungsunterstützungssystem nach einem der Ansprüche 2 bis 4, wobei
die Modellgenerierungseinheit (236) dazu konfiguriert ist, das Modell unter Verwendung von Teilen der Vielzahl von Kultivierungsbedingungen, die von der Kultivierungsbedingungserfassungseinheit (212) erfasst werden, und der Vielzahl von Kultivierungsergebnissen, die von der Kultivierungsergebniserfassungseinheit (214) erfasst werden, zu generieren, und
die Berechnungseinheit (250) dazu konfiguriert ist, die Zuverlässigkeit unter Verwendung anderer Teile der Vielzahl von Kultivierungsbedingungen, die von der Kultivierungsbedingungserfassungseinheit (212) erfasst werden, und der Vielzahl von Kultivierungsergebnissen, die von der Kultivierungsergebniserfassungseinheit (214) erfasst werden, zu berechnen.

6. Kultivierungsunterstützungssystem nach einem der Ansprüche 1 bis 5, umfassend:
eine Vorverarbeitungseinheit (232), die dazu konfiguriert ist, mindestens ein Datenelement der Vielzahl von Kultivierungsbedingungen oder der Vielzahl von Kultivierungsergebnissen vorzuverarbeiten, wobei
die Klassenschätzeinheit (234) so konfiguriert ist, dass sie die Vielzahl von Kultivierungsbedingungen unter Verwendung der vorverarbeiteten Daten in die Vielzahl von Klassen einteilt, und
die Berechnungseinheit (250) dazu konfiguriert ist, die Zuverlässigkeit in jeder der Vielzahl von Klassen unter Verwendung eines Ergebnisses der Klassifizierung zu berechnen.

7. Kultivierungsunterstützungssystem nach Anspruch 6, wobei
die Vorverarbeitungseinheit (232) so konfiguriert ist, dass sie das Vorverarbeiten durchführt, einschließend: mindestens eines von einem Verknüpfen von Daten der Vielzahl von Kultivierungsbedingungen und Daten der Vielzahl von Kultivierungsergebnissen auf einer Zeitachse; einem Komplementieren mindestens eines der Daten der Vielzahl von Kultivierungsbedingungen oder der Daten der Vielzahl von Kultivierungsergebnissen; einem Verarbeiten eines Ausreißers von mindestens einem der Daten der Vielzahl von Kultivierungsbedingungen oder der Daten der Vielzahl von Kultivierungsergebnissen; oder einem Rundungsverarbeiten von mindestens einem der Daten der Vielzahl von Kultivierungsbedingungen oder der Daten der Vielzahl von Kultivierungsergebnissen.

8. Kultivierungsunterstützungssystem nach einem der Ansprüche 1 bis 7, wobei
die Ausgabeeinheit (260) dazu konfiguriert ist, mindestens eines von einem Ausgeben des vorhergesagten Kultivierungsergebnisses zusammen mit der Zuverlässigkeit in der Vielzahl von Klassen, in die die Vielzahl von Kultivierungsbedingungen eingeteilt sind, oder einem Ausgeben der Daten gemäß dem vorhergesagten Kultivierungsergebnis, wenn die Zuverlässigkeit in der Vielzahl von Klassen, in die die Vielzahl von Kultivierungsbedingungen eingeteilt ist, höher oder gleich einem ersten Schwellenwert ist, auszuführen.

9. Kultivierungsunterstützungssystem nach Anspruch 6, wobei
die Vorverarbeitungseinheit (232) dazu konfiguriert ist, Daten der Vielzahl von Kultivierungsbedingungen und Daten der Vielzahl von Kultivierungsergebnissen entsprechend einem Datenerfassungszeitpunkt zu verknüpfen.

10. Kultivierungsunterstützungssystem, umfassend:
eine Kultivierungsbedingungserfassungseinheit (212), die dazu konfiguriert ist, eine Kultivierungsbedingung zum Kultivieren einer Pflanze zu erfassen, wobei die Kultivierungsbedingung eine Umweltbedingung einschließt, unter welcher die Pflanze kultiviert wurde;
eine Klassenschätzeinheit (234), die dazu konfiguriert ist, ein Clustering der Kultivierungsbedingung durchzuführen, die von der Kultivierungsbedingungserfassungseinheit (212) erfasst wird, um die Kultivierungsbedingung in eine Beliebige einer Vielzahl von Klassen einzuteilen, in denen Datensätze von Kultivierungsbedingungen einander ähnlich sind;
eine Kultivierungsergebnisschätzeinheit (240), die dazu konfiguriert ist, ein Kultivierungsergebnis aus der Kultivierungsbedingung bei einer Kultivierung der Pflanze unter Verwendung des Modells vorherzusagen, das ein Kultivierungsergebnis aus der Kultivierungsbedingung vorhersagt, wobei das Kultivierungsergebnis mindestens eines von einer Verletzung beim Kultivieren der Pflanze oder eines Ernteergebnisses der kultivierten Pflanze einschließt; und
eine Ausgabeeinheit (260), die dazu konfiguriert ist, Daten gemäß dem auf der Zuverlässigkeit basierenden vorhergesagten Kultivierungsergebnis in der Vielzahl von Klassen auszugeben, in die die Vielzahl von Kultivierungsbedingungen eingeteilt sind, wobei
die Klassenschätzeinheit (234) dazu konfiguriert ist, die Kultivierungsbedingung, die für die Vorhersage der Kultivierungsergebnisschätzeinheit (240) verwendet wird, in eine Beliebige der Vielzahl von Klassen einzuteilen, in die eine Vielzahl von Kultivierungsbedingungen beim Generieren des Modells eingeteilt wird, das das Kultivierungsergebnis aus der Kultivierungsbedingung vorhersagt.

11. Computerimplentiertes Verfahren zur Kultivierungsunterstützung, umfassend:
Erfassen einer Vielzahl von Kultivierungsbedingungen zum Kultivieren einer Pflanze, wobei jede Kultivierungsbedingung eine Umweltbedingung einschließt, unter welcher die Pflanze kultiviert wurde;
Erfassen einer Vielzahl von Kultivierungsergebnissen bei einer Kultivierung der Pflanze, wobei jedes Kultivierungsergebnis mindestens eines von einer Verletzung beim Kultivieren der Pflanze oder eines Ernteergebnisses der kultivierten Pflanze einschließt;
Durchführen eines Clusterings der Vielzahl der erfassten Kultivierungsbedingungen, um die Vielzahl der Kultivierungsbedingungen in eine Vielzahl von Klassen einzuteilen, in denen die Datensätze von Kultivierungsbedingungen einander ähneln;
Berechnen einer Zuverlässigkeit in jeder der Vielzahl von Klassen für ein Modell, das ein Kultivierungsergebnis aus einer Kultivierungsbedingung vorhersagt, indem die Vielzahl von Kultivierungsbedingungen und die Vielzahl von Kultivierungsergebnissen verwendet werden;
Vorhersagen des Kultivierungsergebnisses aus der Kultivierungsbedingung beim Kultivieren der Pflanze unter Verwendung des Modells; und
Ausgeben von Daten entsprechend dem vorhergesagten Kultivierungsergebnis, wobei
das Durchführen eines Clusterings der Vielzahl von Kultivierungsbedingungen ein Einteilen der Kultivierungsbedingung, die zum Vorhersagen des Kultivierungsergebnisses verwendet wird, in mindestens eine der Vielzahl von Klassen einschließt, und
das Ausgeben von Daten ein Ausgeben der Daten gemäß dem vorhergesagten Kultivierungsergebnis basierend auf der Zuverlässigkeit in der Vielzahl von Klassen einschließt, in die die Vielzahl von Kultivierungsbedingungen eingeteilt sind.

12. Programm, das einen Computer dazu veranlasst, als Folgende zu fungieren:
eine Kultivierungsbedingungserfassungseinheit (212), die dazu konfiguriert ist, eine Vielzahl von Kultivierungsbedingungen zum Kultivieren einer Pflanze zu erfassen, wobei jede Kultivierungsbedingung eine Umweltbedingung einschließt, unter welcher die Pflanze kultiviert wurde;
eine Kultivierungsergebniserfassungseinheit (214), die dazu konfiguriert ist, eine Vielzahl von Kultivierungsergebnissen bei einer Kultivierung der Pflanze zu erfassen, wobei jedes Kultivierungsergebnis mindestens eines von einer Verletzung beim Kultivieren der Pflanze oder eines Ernteergebnisses der kultivierten Pflanze einschließt;
eine Klassenschätzeinheit (234), die dazu konfiguriert ist, ein Clustering der Vielzahl von Kultivierungsbedingungen durchzuführen, die von der Kultivierungsbedingungserfassungseinheit (212) erfasst werden, um die Vielzahl von Kultivierungsbedingungen in eine Vielzahl von Klassen einzuteilen, in denen Datensätze von Kultivierungsbedingungen einander ähnlich sind;
eine Berechnungseinheit (250), die dazu konfiguriert ist, eine Zuverlässigkeit in jeder der Vielzahl von Klassen für ein Modell zu berechnen, das unter Verwendung der Vielzahl von Kultivierungsbedingungen und der Vielzahl von Kultivierungsergebnissen ein Kultivierungsergebnis aus einer Kultivierungsbedingung vorhersagt;
eine Kultivierungsergebnisschätzeinheit (240), die dazu konfiguriert ist, das Kultivierungsergebnis aus der Kultivierungsbedingung bei der Kultivierung der Pflanze unter Verwendung des Modells vorherzusagen; und
eine Ausgabeeinheit (260), die dazu konfiguriert ist, Daten entsprechend dem vorhergesagten Kultivierungsergebnis auszugeben, wobei
die Klassenschätzeinheit (234) dazu konfiguriert ist, die zum Vorhersagen des Kultivierungsergebnisses verwendete Kultivierungsbedingung in mindestens eine der Vielzahl von Klassen einzuteilen, und
die Ausgabeeinheit (260) dazu konfiguriert ist, die Daten entsprechend dem vorhergesagten Kultivierungsergebnis basierend auf der Zuverlässigkeit in der Vielzahl von Klassen auszugeben, in die die Vielzahl von Kultivierungsbedingungen eingeteilt ist.

13. Computerlesbares Aufzeichnungsmedium, das das Programm nach Anspruch 12 speichert.

## Revendications

1. Système de support de culture comprenant :
une unité (212) d'acquisition de condition de culture configurée pour acquérir une pluralité de conditions de culture pour cultiver une plante, chaque condition de culture incluant une condition environnementale dans laquelle la plante a été cultivée ;
une unité (214) d'acquisition de résultat de culture configurée pour acquérir une pluralité de résultats de culture lors d'une culture de la plante, chaque résultat de culture incluant au moins l'un parmi un dommage lors de la culture de la plante ou un résultat de récolte de la plante cultivée ;
une unité (234) d'estimation de classe configurée pour mettre en œuvre le regroupement de la pluralité de conditions de culture acquises par l'unité (212) d'acquisition de condition de culture afin de classer la pluralité de conditions de culture dans une pluralité de classes dans lesquelles des ensembles de données de conditions de culture sont similaires les uns aux autres ;
une unité (250) de calcul configurée pour calculer une fiabilité dans chacune de la pluralité de classes pour un modèle qui prédit un résultat de culture à partir d'une condition de culture en utilisant la pluralité de conditions de culture et la pluralité de résultats de culture ;
une unité (240) d'estimation de résultat de culture configurée pour prédire le résultat de culture à partir de la condition de culture lors de la culture de la plante en utilisant le modèle ; et
une unité (260) de sortie configurée pour délivrer en sortie des données selon le résultat de culture prédit, dans lequel
l'unité (234) d'estimation de classe est configurée pour classer la condition de culture utilisée pour prédire le résultat de culture dans au moins une de la pluralité de classes, et
l'unité (260) de sortie est configurée pour délivrer en sortie les données selon le résultat de culture prédit sur la base de la fiabilité dans la pluralité de classes dans lesquelles sont classées la pluralité de conditions de culture.

2. Système de support de culture selon la revendication 1, comprenant une unité (236) de génération de modèle configurée pour générer le modèle qui prédit le résultat de culture à partir de la condition de culture.

3. Système de support de culture selon la revendication 2, dans lequel
l'unité (236) de génération de modèle est configurée pour générer un modèle d'une structure de modèle de réseau bayésien.

4. Système de support de culture selon la revendication 3, dans lequel
l'unité (234) d'estimation de classe est configurée pour classer, dans la pluralité de classes, la pluralité de conditions de culture acquises par l'unité (212) d'acquisition de condition de culture, et
l'unité (236) de génération de modèle est configurée pour générer le modèle de la structure de modèle de réseau bayésien en utilisant la pluralité de conditions de culture classées dans la pluralité de classes et la pluralité de résultats de culture.

5. Système de support de culture selon l'une quelconque des revendications 2 à 4, dans lequel
l'unité (236) de génération de modèle est configurée pour générer le modèle en utilisant des parties de la pluralité de conditions de culture acquises par l'unité (212) d'acquisition de condition de culture et la pluralité de résultats de culture acquis par l'unité (214) d'acquisition de résultat de culture, et
l'unité (250) de calcul est configurée pour calculer la fiabilité en utilisant d'autres parties de la pluralité de conditions de culture acquises par l'unité (212) d'acquisition de condition de culture et la pluralité de résultats de culture acquis par l'unité (214) d'acquisition de résultat de culture.

6. Système de support de culture selon l'une quelconque des revendications 1 à 5, comprenant :
une unité (232) de prétraitement configurée pour prétraiter au moins un élément de données de la pluralité de conditions de culture ou de la pluralité de résultats de culture, dans lequel
l'unité (234) d'estimation de classe est configurée pour classer la pluralité de conditions de culture dans la pluralité de classes en utilisant les données prétraitées, et
l'unité (250) de calcul est configurée pour calculer la fiabilité dans chacune de la pluralité de classes en utilisant un résultat du classement.

7. Système de support de culture selon la revendication 6, dans lequel
l'unité (232) de prétraitement est configurée pour mettre en œuvre le prétraitement incluant : au moins l'un parmi l'association de données de la pluralité de conditions de culture et de données de la pluralité de résultats de culture sur un axe de temps ; compléter au moins l'une parmi les données de la pluralité de conditions de culture ou les données de la pluralité de résultats de culture ; le traitement d'une aberration d'au moins l'une parmi les données de la pluralité de conditions de culture ou les données de la pluralité de résultats de culture ; ou l'arrondissement du traitement d'au moins l'une parmi les données de la pluralité de conditions de culture ou les données de la pluralité de résultats de culture.

8. Système de support de culture selon l'une quelconque des revendications 1 à 7, dans lequel
l'unité (260) de sortie est configurée pour mettre en œuvre au moins l'une parmi la sortie du résultat de culture prédit avec la fiabilité dans la pluralité de classes dans lesquelles sont classées la pluralité de conditions de culture, ou la sortie des données selon le résultat de culture prédit lorsque la fiabilité dans la pluralité de classes dans lesquelles sont classées la pluralité de conditions de culture est supérieure ou égale à une première valeur seuil.

9. Système de support de culture selon la revendication 6, dans lequel
l'unité (232) de prétraitement est configurée pour associer des données de la pluralité de conditions de culture et des données de la pluralité de résultats de culture selon un temps d'acquisition de données.

10. Système de support de culture comprenant :
une unité (212) d'acquisition de condition de culture configurée pour acquérir une condition de culture pour cultiver une plante, la condition de culture incluant une condition environnementale dans laquelle la plante a été cultivée ;
une unité (234) d'estimation de classe configurée pour mettre en œuvre le regroupement de la condition de culture acquise par l'unité (212) d'acquisition de condition de culture afin de classer la condition de culture dans l'une quelconque d'une pluralité de classes dans lesquelles des ensembles de données de conditions de culture sont similaires les uns aux autres ;
une unité (240) d'estimation de résultat de culture configurée pour prédire un résultat de culture à partir de la condition de culture lors d'une culture de la plante en utilisant un modèle qui prédit un résultat de culture à partir de la condition de culture, le résultat de culture incluant au moins l'un parmi un dommage lors de la culture de la plante ou un résultat de récolte de la plante cultivée ; et
une unité (260) de sortie configurée pour délivrer en sortie des données selon le résultat de culture prédit sur la base d'une fiabilité dans la pluralité de classes dans lesquelles sont classées la pluralité de conditions de culture, dans lequel
l'unité (234) d'estimation de classe est configurée pour classer la condition de culture, qui est utilisée pour la prédiction de l'unité (240) d'estimation de résultat de culture, dans l'une quelconque de la pluralité de classes dans lesquelles une pluralité de conditions de culture sont classées en générant le modèle qui prédit le résultat de culture à partir de la condition de culture.

11. Procédé mis en œuvre par ordinateur pour support de culture comprenant :
l'acquisition d'une pluralité de conditions de culture pour cultiver une plante, chaque condition de culture incluant une condition environnementale dans laquelle la plante a été cultivée ;
l'acquisition d'une pluralité de résultats de culture lors d'une culture de la plante, chaque résultat de culture incluant au moins l'un parmi un dommage lors de la culture de la plante ou un résultat de récolte de la plante cultivée ;
la mise en œuvre du regroupement de la pluralité de conditions de culture acquises afin de classer la pluralité de conditions de culture dans une pluralité de classes dans lesquelles des ensembles de données de conditions de culture sont similaires les uns aux autres ;
le calcul d'une fiabilité dans chacune de la pluralité de classes pour un modèle qui prédit un résultat de culture à partir d'une condition de culture en utilisant la pluralité de conditions de culture et la pluralité de résultats de culture ;
la prédiction du résultat de culture à partir de la condition de culture lors de la culture de la plante en utilisant le modèle ; et
la sortie de données selon le résultat de culture prédit, dans lequel la mise en œuvre d'un regroupement de la pluralité de conditions de culture inclut le classement de la condition de culture utilisée pour prédire le résultat de culture dans au moins une de la pluralité de classes, et
la sortie de données inclut la sortie des données selon le résultat de culture prédit sur la base de la fiabilité dans la pluralité de classes dans lesquelles sont classées la pluralité de conditions de culture.

12. Programme qui amène un ordinateur à fonctionner en tant que :
une unité (212) d'acquisition de condition de culture configurée pour acquérir une pluralité de conditions de culture pour cultiver une plante, chaque condition de culture incluant une condition environnementale dans laquelle la plante a été cultivée ;
une unité (214) d'acquisition de résultat de culture configurée pour acquérir une pluralité de résultats de culture lors d'une culture de la plante, chaque résultat de culture incluant au moins l'un parmi un dommage lors de la culture de la plante ou un résultat de récolte de la plante cultivée ;
une unité (234) d'estimation de classe configurée pour mettre en œuvre le regroupement de la pluralité de conditions de culture acquises par l'unité (212) d'acquisition de condition de culture afin de classer la pluralité de conditions de culture dans une pluralité de classes dans lesquelles des ensembles de données de conditions de culture sont similaires les uns aux autres ;
une unité (250) de calcul configurée pour calculer une fiabilité dans chacune de la pluralité de classes pour un modèle qui prédit un résultat de culture à partir d'une condition de culture en utilisant la pluralité de conditions de culture et la pluralité de résultats de culture ;
une unité (240) d'estimation de résultat de culture configurée pour prédire le résultat de culture à partir de la condition de culture lors de la culture de la plante en utilisant le modèle ; et
une unité (260) de sortie configurée pour délivrer en sortie des données selon le résultat de culture prédit, dans lequel
l'unité (234) d'estimation de classe est configurée pour classer la condition de culture utilisée pour prédire le résultat de culture dans au moins une de la pluralité de classes, et
l'unité (260) de sortie est configurée pour délivrer en sortie les données selon le résultat de culture prédit sur la base de la fiabilité dans la pluralité de classes dans lesquelles sont classées la pluralité de conditions de culture.

13. Support d'enregistrement lisible par ordinateur stockant le programme selon la revendication 12.
